# EUROPEAN PATENT APPLICATION

(11) **EP 3 633 512 A1**
(43) Date of publication of application: **08.04.2020**
(21) Application number: 18198571.4
(22) Date of filing: 04.10.2018
(51) Int. Cl.: G06F 11/14, G06F 11/07

(54) **ELECTRONIC DEVICE, TV SET AND METHOD**

(71) Applicant: Vestel Elektronik Sanayi ve Ticaret A.S., 45030 Manisa (TR)
(72) Inventor: DOGAN, Murat, 45030 Manisa (TR)
(74) Representative: Kehl, Ascherl, Liebhoff & Ettmayr Patentanwälte Partnerschaft mbB

(57) **Abstract**

The present invention provides an electronic device (100, 200, 300) comprising a non-volatile memory unit (101, 301) configured to store a computer program product (102), a volatile memory unit (103, 303), and a processing unit (104, 304) coupled to the non-volatile memory unit (101, 301) and the volatile memory unit (103, 303), wherein the processor is configured to load the computer program product (102) from the non-volatile memory unit (101, 301) into the volatile memory unit (103, 303) and execute the computer program product, wherein the computer program product (102) is configured to store, upon receiving a signal (105) indicating a system crash, on the non-volatile memory unit (101, 301) a task list (106, 306) of tasks to be performed during the startup of the electronic device (100, 200, 300). Further, the present invention provides a TV set (250) and a method.

## Description

### TECHNICAL FIELD

The invention relates to an electronic device. Further, the present invention relates to a TV set and a method for operating an electronic device.

### BACKGROUND

Although applicable to any computer program, the present invention will mainly be described in conjunction with computer programs in embedded systems, like e.g. TV sets.

In modern electronic devices, like e.g. TV sets, usually a processor or CPU is provided that performs general control functions of the electronic device. Such a processor may e.g. execute an operating system and in the operating system, applications may be executed. Such applications may e.g. perform channel switching, GUI display and the like.

Further, such applications may e.g. store their state in a database. Such electronic systems may therefore utilize so called in-core disks. To increase system performance the whole database is usually copied to the in-core disks during operation.

While increasing the runtime performance of the system, the booting duration is also increased since the whole database needs to be copied to the volatile memory, e.g. the in-core disk. Further, although a database and its contents may be restored from a backup, the backup may be incomplete or outdated.

A database usually has multiple clients having multiple data units to store in the database. Speaking in terms of embedded systems, the database may be provided as a data storage by the operating system of the embedded system and the clients may be applications writing to said data storage. Writing multiple data units to the database is not an instantaneous operation and may require multiple sequential transactions. Due to the nature of this sequential update or write operation, computer systems utilize - as indicated above - backup-based recovery methods, in the event of a system crash.

While the data integrity can be achieved by utilizing such backup-based recovery methods, it is almost never possible to guaranty the overall data completeness. This means that only the data may be recovered that has already been written to database prior to the system crash.

This means that while some data records of some clients may be complete after the recovery operation, the data of other clients may be incomplete or outdated, resulting in an incomplete or inconsistent active state behavior of the respective clients after the recovery operation.

There is a need to considers not only the recovery of the database but also the recovery of the active state of the system.

### SUMMARY OF THE INVENTION

The above stated problem is solved by the features of the independent claims. It is understood, that independent claims of a claim category may be formed in analogy to the dependent claims of another claim category.

Accordingly, it is provided:
An electronic device comprising a non-volatile memory unit configured to store a computer program product, a volatile memory unit, and a processing unit coupled to the non-volatile memory unit and the volatile memory unit, wherein the processor is configured to load the computer program product from the non-volatile memory unit into the volatile memory unit and execute the computer program product, wherein the computer program product is configured to store, upon receiving a signal indicating a system crash, on the non-volatile memory unit a task list of tasks to be performed during the startup of the electronic device.

Further, it is provided:
A TV set comprising a display, and an electronic device according to any one of the preceding claims, wherein the electronic device is coupled to the display.

Further, it is provided:
A method for operating an electronic device with a non-volatile memory unit, a volatile memory unit and a processing unit, the method comprising loading a computer program product from the non-volatile memory, executing the loaded computer program product, and storing by the computer program product, upon receiving a signal indicating a system crash, on the non-volatile memory unit a task list of tasks to be performed during the startup of the electronic device.

The present invention is based on the finding, that there exist multiple scenarios in embedded systems where active state inconsistencies may occur after a system crash. Some example scenarios demonstrating the active state inconsistencies that a TV set user might encounter after system recovery will be presented below.

A TV set user may press the power key of the remote controller to put the TV into standby mode. In that case, if a system crash occurs right after the TV started with processing the standby request but before recording this request to the database, the TV might wake up into an active state after system reset due to the system crash, ignoring the last standby request.

In another example, a TV set user may schedule a record timer and put the system into standby mode. In that case, the system must wakeup to perform the requested record operation when the timer expires, and of course the system should still be able to resume the record operation if a crash occurs just before or during the scheduled record operations.

Another more critical state inconsistency may present itself if the system crash occurs while performing scheduled software or channel scan operations in standby mode. Modern TV sets may e.g. wake up at a device specific time, usually in the middle of the night, in order to perform daily automatic scan operations, and the expected behavior is that the TV set goes back into standby mode once the scan operation is completed. In order to not disturb the users while performing the scan operations, all audio, video and display components are tuned off and the scan operation is done in background, in a passive state. If the system reboots due to a crash during these standby operations and wakes up into active state by turning the audio, video and display components on, this would result into a really bad user experience in the middle of the night.

The present invention therefore provides the electronic device with the non-volatile memory unit that allows the computer program product storing the task list prior to shut down or reset of the electronic device. The electronic device further comprises the volatile memory that may be used by the processing unit during normal operation for execution of the computer program product.

The non-volatile memory may be any kind of memory that does not loose contents when powered off. Such non-volatile memories may e.g. comprise ROM, (E)EPROM, Flash memory, hard disk drives, SPI connected memories or the like. In contrast, the volatile memory may be a memory that loses its contents when powered off. Such memory may e.g. be a RAM memory, a cache memory in the processing unit or the like. It is understood, that program code and data may be stored on the same or on different non-volatile memories.

It is understood, that the computer program product may be a separate or dedicated computer program product. In this case, the computer program product may e.g. monitor the current state of the electronic device and determine the tasks to be performed upon the next startup of the electronic device based on the current state of the electronic device. To this end, the computer program product may be connected to other applications being executed by the processing unit, e.g. via respective APIs, function calls, shared memory spaces or the like.

As alternative, the computer program product may be part of or may be included in another application (may also be called computer program product), that is executed by the processing unit. The application may e.g. be a control application that controls the functions of the electronic device. In case of the electronic device being a TV set, the application may e.g. control the power state (on/stand-by), the volume, the selected channel and the like. Further, such an application may e.g. display a user interface on the screen of the TV set.

With the above features, the computer program product may e.g. store a task list of tasks to be performed when it receives a signal that indicates a system crash. Since the tasks in the task list may be executed during the next system startup, the state of the computer program product at the moment just before the system crash may be restored and inconsistencies may be avoided.

Further embodiments of the present invention are subject of the further subclaims and of the following description, referring to the drawings.

In an embodiment, the electronic device may comprise a recovery computer program product that may be configured to check on startup of the electronic device for the presence of a task list in the non-volatile memory and to perform the tasks in the task list if the task list is present in the non-volatile memory.

During startup, the processing unit may perform some initial steps for preparing the operating environment for the recovery computer program product and the computer program product.

After completing the initial steps, the recovery computer program product may check the non-volatile memory for the existence of any crash recovery task list. If no crash recovery task list is present in the non-volatile memory, the normal operation may be initiated, e.g. by executing the computer program product.

On the other hand, if a crash recovery task list was stored on non-volatile memory, e.g. because of a system crash, the recovery computer program product reads the task list and determines the tasks to be executed. The recovery computer program product will then process the scheduled tasks to restore the last known or stored state of the electronic device. After executing the respective tasks, normal operation of the electronic device may be initiated.

It is understood, that the recovery computer program product may remove the stored crash recovery task list from non-volatile memory after performing the respective tasks, to ensure it is not reprocessed again after the next system reboot.

The recovery computer program product may be a separate program product that may be executed once during every start of the electronic device. However, the recovery computer program product may also be provided as part of or included in the computer program product. As further alternative, the recovery computer program product may be provided as part of an operating system or a firmware of the electronic device.

The format of the crash recovery task list may be application specific, and may be in textual or binary format. The task list will in any base be in a format that can be read and interpreted to identify all necessary parameters and tasks the recovery computer program product can run to put the electronic device in a specific state. A textual entry like the following for example "STANDBY_STATUS: On, SOURCE : TV, CHANNEL : 12" can be interpreted by the recovery computer program product in a such way that the system was not in standby mode and tuned to channel 12 on TV source when the system crash occurred.

In another embodiment, the electronic device may comprise an operating system stored in the non-volatile memory and being executed by the processing unit during operation of the electronic device, wherein the operating system may be configured to send the signal to the computer program product in case of a system crash of the electronic device.

The operating system may e.g. comprise a Unix-like operating system. In such operating systems, the operating system launches during startup the process or the application that is responsible for completing the tasks the system is designed for, i.e. the computer program product. Once launched, the computer program product performs application specific initialization steps to get the system up and working, such as reading and processing the database and configuring the memory and IO resources.

If the operating system sends any signals indicating a system crash during normal operation of the computer program product, the computer program product then creates the task list specifying what to do to restore the current application state, and stores the task list on non-volatile memory, e.g. in a task list database.

In a Unix-like operating system for example, the processing unit may first load and execute a power manager and/or a common firmware environment to configure basic power and IO settings. The processing unit may then load and execute a boot loader to make the system ready to launch the operating system which then runs the required drivers and processes (e.g. the computer program product) to complete the tasks the system is designed for.

The processes running on the processor may store some application specific data to a database during their life span if the data will be required after the system resets, e.g. after a cold or warm boot. Therefore, a system must ensure the data that is stored to a database can be read back after the system resets, which is usually not possible if the database update operation was interrupted due to a system crash. To deal with such extreme cases, the operating system may e.g. keep and manage a backup of the database, and may use the backup database if the original database is corrupt or cannot pass necessary sanity checks.

In Unix-like and other POSIX-compliant operating systems, the operating system may be able to notify other processes or threads about the root cause of the system crash via operating system specific notifications that are known as signals. Signals may e.g. be seen as a limited form of inter-process communication (IPC). When a signal is sent, the operating system interrupts the target process' normal flow of execution and executes the signal handler routine of the process if it was registered before.

In such systems, the processor may also provide a watch-dog-timer which can be set to reset the system if not cleared within an application specific time periodically, which is the case when the system enters into a faulty state.

In a further embodiment, the computer program product may comprise at least one signal handler function and may further be configured to register the at least one signal handler function to receive the signal from the operating system.

As indicated above, in Unix-like and other POSIX-compliant operating systems or other respective operating system, the operating system may be able to notify other processes or threads about the root cause of the system crash via operating system specific notifications that are known as signals. When a signal is sent, the operating system interrupts the target process' normal flow of execution and executes the signal handler routine of the process if it was registered before.

The computer program product may register one or more different signal handler functions. Such signal handler functions may e.g. be registered for the so called SIGILL and SIGTERM signals. The SIGILL signal may be used by the operating system to signal a faulty state on execution of an illegal instruction. The SIGTERM may be used by the operating system to transmit a termination request. It is understood, that the above listed signals are just exemplarily named and that any other respective signal may be used instead.

The signal handlers are the part of the computer program product that may create a task list according to the active state of the process (e.g. the computer program product), which then can be used to put the electronic system or process into the same state once the system resets due to a system crash, thereby avoiding any state inconsistencies caused by incomplete or outdated database records.

In an embodiment, the electronic device may comprise a watchdog timer configured to reset the electronic device if the watchdog timer is not reset within a predetermined time limit, wherein the computer program product may be configured to enable after startup the watchdog timer and to disable the watchdog timer after receiving the signal while writing the task list, and especially to enable the watchdog timer after the task list is written.

In operating systems, e.g. the processor may provide a watchdog timer, which may be set to reset the system if not cleared within an application specific time periodically, which is the case when the system enters into a faulty state.

The computer program product may enable the watchdog timer to ensure the system can reset after entering into an irresponsive state, i.e. if an application "hangs" in an infinite loop.

If the signal is received, i.e. the electronic device crashed, the computer program product may first disable the watchdog timer to prevent an untimely system reset, i.e. while the task list is written to the non-volatile memory.

However, after the task list is written, a reset of the electronic system would be beneficial. Therefore, the computer program product may re-enable the watchdog timer after writing the task list, for a system reset to happen. As alternative, the computer program product may also directly initiate the system reset after writing the task list.

In a further embodiment, the computer program product may be configured to store crash information when storing the task list.

The crash information may also be referred to as debug information and may be stored in the non-volatile memory for debug and diagnostic purposes. The crash information may e.g. comprise back trace and call stack information of the process or thread causing the system crash.

The present invention can be applied to any computer system having a non-volatile memory, and an operating system able to notify all running processes or tasks that the system must reset in order to recover from a faulty state.

The invention is capable of restoring the last known working state of a system without depending on existing application databases and their backups. In fact, the invention can restore the last know working state of a system even when the existing application databases and their backups are corrupt or incomplete due to system crash. The created crash recovery task list further has a minimal system footprint, and therefore does consume an ignorable amount of system resources.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of an electronic device according to the present invention;
Fig. 2 shows a block diagram of an embodiment of a TV set according to the present invention;
Fig. 3 shows a block diagram of another embodiment of an electronic device according to the present invention;
Fig. 4 shows a flow diagram of an embodiment of a method according to the present invention; and
Fig. 5 shows a flow diagram of another embodiment of a method according to the present invention.

In the figures like reference signs denote like elements unless stated otherwise.

### DETAILED DESCRIPTION OF THE DRAWINGS

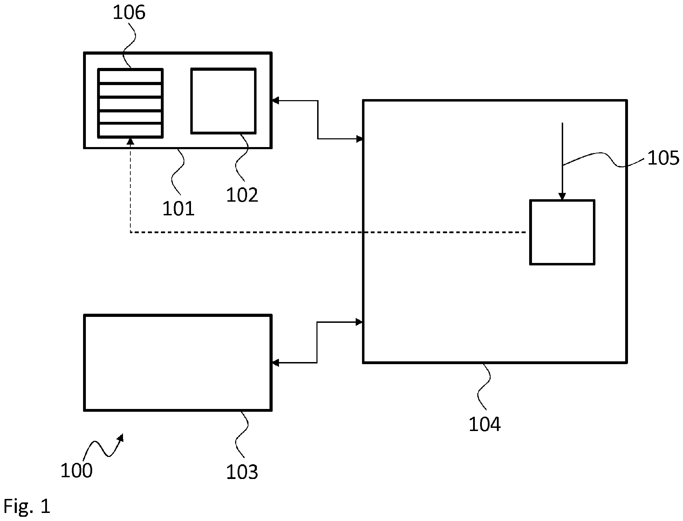

Fig. 1 shows a block diagram of an embodiment of an electronic device 100. The electronic device 100 comprises a non-volatile memory unit 101 and a volatile memory unit 103 that are both coupled to a processing unit 104.

The non-volatile memory unit 101 stores a computer program product 102 that may be executed by the processing unit 104. Executing may e.g. comprise copying the program code and the data of the computer program product 102 in the volatile memory unit 103 and executing the program code with the processing unit 104.

The computer program product 102 further upon receiving a signal 105 indicating a system crash, stores on the non-volatile memory unit 101 a task list 106 of tasks to be performed during the startup of the electronic device 100.

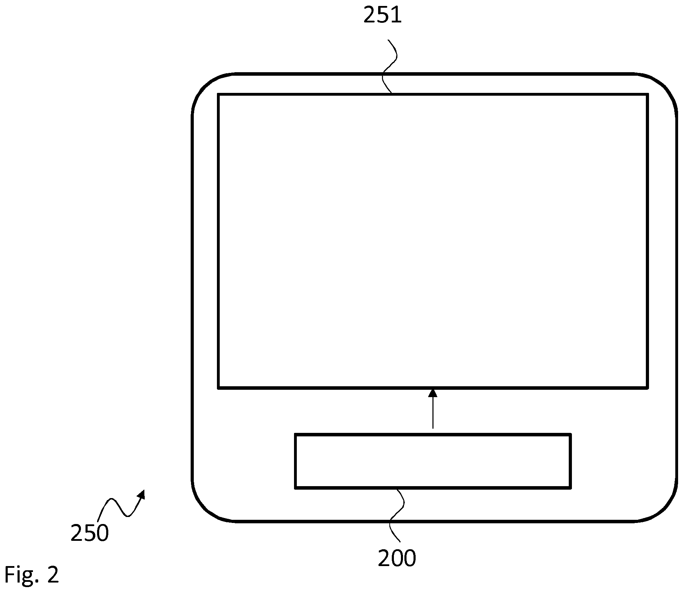

The electronic device 100 may e.g. be part of a larger entity, for example a TV set as shown in Fig. 2. Therefore, it is understood, that the electronic device 100 may comprise further elements, like a power supply input, digital and/or analog interfaces, and the like.

Further, it is understood, that the processing unit 104 may e.g. execute an operating system, the operating system providing drivers to the hardware of the electronic device 100 and loading/executing the computer program product 102.

In addition, it is understood, that any other application or program may be executed by the processing unit 104 as required for the operation of the electronic device 100. Further, the computer program product 102 may also be capable of storing a task list for such other applications or programs.

Fig. 2 shows a block diagram of an embodiment of a TV set 250. The TV set 250 comprises a display 251 and an electronic device 200 according to the present invention.

The electronic device 200 may e.g. be the control unit of the TV set 250. Therefore, the electronic device 200 may receive via a respective interface video signals, e.g. DVB-S signals, DVB-T signals or DVB-C signals or the like, decode the signals into respective video data and display a respective video on the display 251.

The computer program product may e.g. also comprise functions to display a user interface on the display 251 and allow the user to control the TV set 250.

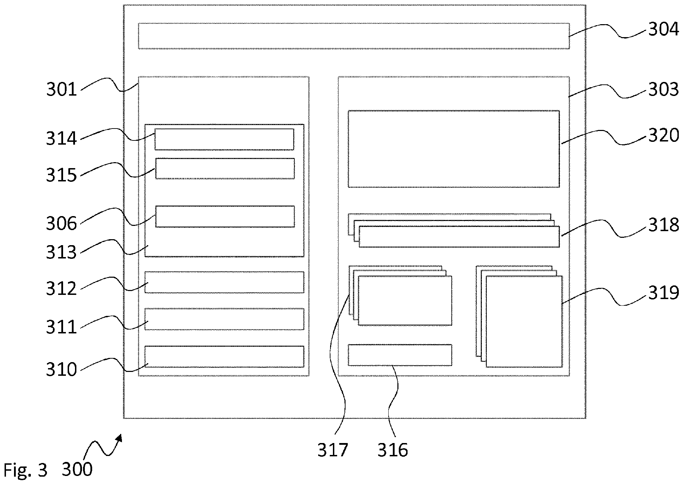

Fig. 3 shows a block diagram of another embodiment of an electronic device 300.

The electronic device 300 comprises a of a processing unit 304, a non-volatile memory unit 301 and a volatile memory unit 303. The non-volatile memory unit 301 may e.g. comprise a flash disk, a floppy disk or any other writable storage device.

The non-volatile memory unit 301 may store the program code executed by the processing unit 304, including a power manager 310, boot loader 311, operating system 312 and a file system 313.

The system database 314 may be maintained in the file system 313 or in any other way, like e.g. storing raw data to some specific address blocks on the non-volatile memory unit 301.

For operation, the processing unit 304 loads program code from the non-volatile memory unit 301 into a program memory on the volatile memory unit 303 and executes one or more respective processes. In a Unix-like operating system for example, the processing unit 304 will first load and execute a power manager and/or a common firmware environment 310 to configure basic power and IO settings, then loads and executes the boot loader 311 to make the system ready to launch the operating system 312, comprising a kernel 316, which then runs the required drivers 317 and processes 318 to complete the tasks the system designed for, e.g. controlling a display of a TV set.

The computer program product will also run as one of the processes running on the processing unit 304 and may store some application specific data to the volatile database 319 during its life span, especially if the said data will be required even after the electronic device 300 resets, e.g. after a cold or warm boot.

Therefore, the electronic device 300 must ensure the data that is stored to the database 314 can be read back after the system resets, which is usually not possible if the database update operation was interrupted due to a system crash. To deal with such extreme cases, the system keeps and manages a backup 315 of the database 314, and uses the backup database 315 if the original database 314 is corrupt or cannot pass necessary sanity checks.

It is understood, that the kernel 316 may communicate with the processes 318 via any type of inter process communication, for example respective signals.

In addition to the backup database 315, the computer program product further implements the features for storing a task list when a system crash happens in the electronic device 300 and is indicated by the respective signals. At this point, the function of the computer program product is not explicitly discussed, but reference is made to the above explanations and the below explanations of the method according to the present invention, which may be implemented by the computer program product.

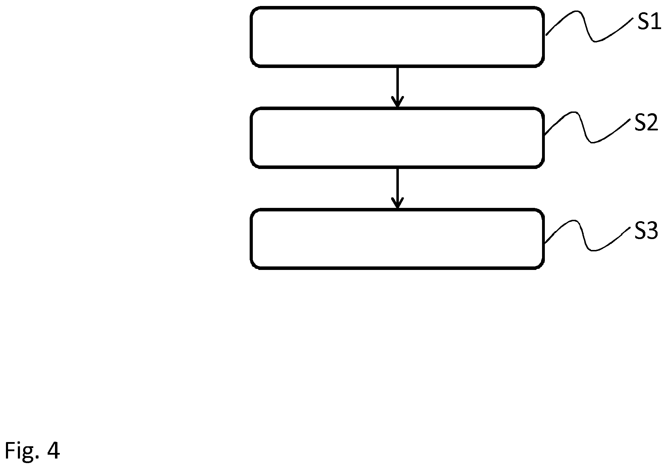

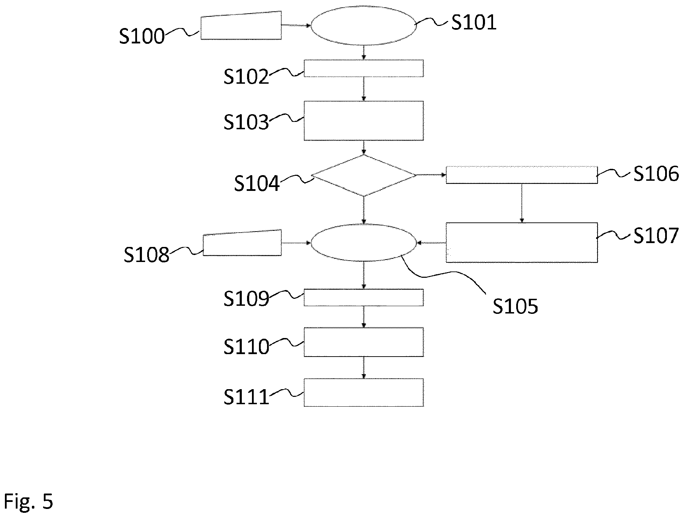

For sake of clarity in the following description of the method-based Figs. 4 and 5 the reference signs used above in the description of apparatus-based Figs. 1 - 3 will be maintained.

Fig. 4 shows a flow diagram of an embodiment of a method for operating an electronic device 100, 200, 300 with a non-volatile memory unit 101, 301, a volatile memory unit 103, 303 and a processing unit 104, 304.

The method comprises loading S1 a computer program product 102 from the non-volatile memory, executing S2 the loaded computer program product 102, and storing S3 by the computer program product 102, upon receiving a signal 105 indicating a system crash, on the non-volatile memory unit 101, 301 a task list 106, 306 of tasks to be performed during the startup of the electronic device 100, 200, 300.

The method may also comprise checking on startup of the electronic device 100, 200, 300 for the presence of a task list 106, 306 in the non-volatile memory, and performing the tasks in the task list 106, 306 if the task list 106, 306 is present in the non-volatile memory. Further, an operating system 312 stored in the non-volatile memory may be executed, wherein the operating system 312 may send the signal 105 to the computer program product 102 in case of a system crash of the electronic device 100, 200, 300.

The computer program product 102 may comprise at least one signal handler function and may register the at least one signal handler function to receive the signal 105 from the operating system 312.

In addition, the method may comprise resetting the electronic device 100, 200, 300 if a watchdog timer of the electronic device 100, 200, 300 is not reset within a predetermined time limit, wherein the computer program product 102 enables after startup the watchdog timer and disables the watchdog timer after receiving the signal 105 while writing the task list 106, 306, and especially enables the watchdog timer after the task list 106, 306 is written. The computer program product 102 may in addition to storing the task list 106, 206 also store crash information.

Fig. 5 shows a flow diagram of another embodiment of a method for operating an electronic device 100, 200, 300.

In step S100 the operating system launches the process or the computer program product that is responsible for completing the tasks the system is designed. Once launched, in step S101 the computer program product starts running. The computer program product in step S102 performs some computer program product specific initialization steps to get the system up and working, such as reading and processing the database and configuring the memory and IO resources. The computer program product then in step S103 registers a signal handler to receive certain operating system signals indicating a faulty state, such as for example SIGILL on execution of an illegal instruction or SIGTERM on termination request. The computer program product may also enable the watchdog timer in this step to ensure the system can reset after entering into an irresponsive state.

After completing the initial steps, the computer program product checks the non-volatile memory for the existence of any crash recovery task list in step S104. If no crash recovery task list is available on the non-volatile memory, the computer program product performs normal operations step S105. On the other hand, if a crash recovery task list was stored on non-volatile memory before, the computer program product in step S106 reads the task list and determines the tasks to execute, and in step S107 processes the scheduled tasks to restore the last known active state of the system, removes the stored crash recovery task database from non-volatile memory to ensure it is not reprocessed when the computer program product launched after next system reboot, and finally continuous with performing normal operations S105.

If the operating system sends any signals indicating a system crash in step S108 during computer program products' normal operation mode in step S105, the computer program product first disables the watchdog timer in step S109 to prevent an untimely system reset, and then in step S110 creates a task list specifying what to do to restore current computer program product state, and stores the task list to a task list database on non-volatile memory. Finally, the computer program product re-enables the watchdog timer and waits for system reset S111.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides an electronic device 100, 200, 300 comprising a non-volatile memory unit 101, 301 configured to store a computer program product 102, a volatile memory unit 103, 303, and a processing unit 104, 304 coupled to the non-volatile memory unit 101, 301 and the volatile memory unit 103, 303, wherein the processor is configured to load the computer program product 102 from the non-volatile memory unit 101, 301 into the volatile memory unit 103, 303 and execute the computer program product, wherein the computer program product 102 is configured to store, upon receiving a signal 105 indicating a system crash, on the non-volatile memory unit 101, 301 a task list 106, 306 of tasks to be performed during the startup of the electronic device 100, 200, 300. Further, the present invention provides a TV set 250 and a method.

### List of reference signs

- 100, 200, 300: electronic device
- 101, 301: non-volatile memory unit
- 102: computer program product
- 103,303: volatile memory unit
- 104, 304: processing unit
- 105: signal
- 106,306: task list

- 250: TV set
- 251: display

- 310: power manager
- 311: boot loader
- 312: operating system
- 313: file system
- 314: database
- 315: backup
- 316: kernel
- 317: drivers
- 318: processes
- 319: volatile database
- 320: free memory

- S1, S2, S3: method steps
- S100, S101, S102, S103, S104, S105: method steps
- S106, S107, S108, S109, S110, S111: method steps

## Claims

1. Electronic device (100, 200, 300) comprising:
a non-volatile memory unit (101, 301) configured to store a computer program product (102),
a volatile memory unit (103, 303), and
a processing unit (104, 304) coupled to the non-volatile memory unit (101, 301) and the volatile memory unit (103, 303), wherein the processor is configured to load the computer program product (102) from the non-volatile memory unit (101, 301) into the volatile memory unit (103, 303) and execute the computer program product (102),
wherein the computer program product (102) is configured to store, upon receiving a signal (105) indicating a system crash, on the non-volatile memory unit (101, 301) a task list (106, 306) of tasks to be performed during the startup of the electronic device (100, 200, 300).

2. Electronic device (100, 200, 300) according to claim 1, comprising a recovery computer program product (102) that is configured to check on startup of the electronic device (100, 200, 300) for the presence of a task list (106, 306) in the non-volatile memory and to perform the tasks in the task list (106, 306) if the task list (106, 306) is present in the non-volatile memory.

3. Electronic device (100, 200, 300) according to any one of the preceding claims, comprising an operating system (312) stored in the non-volatile memory and being executed by the processing unit (104, 304) during operation of the electronic device (100, 200, 300),
wherein the operating system (312) is configured to send the signal (105) to the computer program product (102) in case of a system crash of the electronic device (100, 200, 300).

4. Electronic device (100, 200, 300) according to claim 3, wherein the computer program product (102) comprises at least one signal handler function and is configured to register the at least one signal handler function to receive the signal (105) from the operating system (312).

5. Electronic device (100, 200, 300) according to any one of the preceding claims, comprising a watchdog timer configured to reset the electronic device (100, 200, 300) if the watchdog timer is not reset within a predetermined time limit, wherein the computer program product (102) is configured to enable after startup the watchdog timer and to disable the watchdog timer after receiving the signal (105) while writing the task list (106, 306), and especially to enable the watchdog timer after the task list (106, 306) is written.

6. Electronic device (100, 200, 300) according to any one of the preceding claims, wherein the computer program product (102) is configured to store crash information when storing the task list (106, 306).

7. TV set (250) comprising:
a display (251), and
an electronic device (100, 200, 300) according to any one of the preceding claims, wherein the electronic device (100, 200, 300) is coupled to the display (251).

8. Method for operating an electronic device (100, 200, 300) with a non-volatile memory unit (101, 301), a volatile memory unit (103, 303) and a processing unit (104, 304), the method comprising:
loading (S1) a computer program product (102) from the non-volatile memory,
executing (S2) the loaded computer program product (102), and
storing (S3) by the computer program product (102), upon receiving a signal (105) indicating a system crash, on the non-volatile memory unit (101, 301) a task list (106, 306) of tasks to be performed during the startup of the electronic device (100, 200, 300).

9. Method according to claim 8, comprising checking on startup of the electronic device (100, 200, 300) for the presence of a task list (106, 306) in the non-volatile memory, and performing the tasks in the task list (106, 306) if the task list (106, 306) is present in the non-volatile memory.

10. Method according to any one of the preceding claims 8 and 9, comprising executing an operating system (312) stored in the non-volatile memory, wherein the operating system (312) sends the signal (105) to the computer program product (102) in case of a system crash of the electronic device (100, 200, 300).

11. Method according to claim 10, wherein the computer program product (102) comprises at least one signal handler function and registers the at least one signal handler function to receive the signal (105) from the operating system (312).

12. Method according to any one of the preceding claims 8 to 11, comprising resetting the electronic device (100, 200, 300) if a watchdog timer of the electronic device (100, 200, 300) is not reset within a predetermined time limit, wherein the computer program product (102) enables after startup the watchdog timer and disables the watchdog timer after receiving the signal (105) while writing the task list (106, 306), and especially enables the watchdog timer after the task list (106, 306) is written.

13. Method according to any one of the preceding claims 8 to 12, wherein the computer program product (102) stores crash information when storing the task list (106, 306).
